(19) Europäisches Patentamt

European Patent Office

Office européen des brevets

(11) **EP 1 501 338 A2**

(12) **EUROPÄISCHE PATENTANMELDUNG**

(43) Veröffentlichungstag:
   **26.01.2005 Patentblatt 2005/04**

(51) Int Cl.⁷: **H05B 41/292**, H05B 41/288

(21) Anmeldenummer: **04015908.9**

(22) Anmeldetag: **06.07.2004**

(84) Benannte Vertragsstaaten:
   **AT BE BG CH CY CZ DE DK EE ES FI FR GB GR
   HU IE IT LI LU MC NL PL PT RO SE SI SK TR**
   Benannte Erstreckungsstaaten:
   **AL HR LT LV MK**

(30) Priorität: **24.07.2003 DE 10333820**

(71) Anmelder: **Patent-Treuhand-Gesellschaft für
   elektrische Glühlampen mbH
   81543 München (DE)**

(72) Erfinder: **Kästle, Herbert
   83278 Traunstein (DE)**

(54) **Schaltungsanordnung zur Betreiben mindestens einer Hochdruckentladungslampe**

(57)    Die vorliegende Erfindung betrifft eine Schaltungsanordnung zum Betreiben mindestens einer Hochdruckentladungslampe (16) mit vier Schaltern ($Q_1$ bis $Q_4$) in Vollbrückenanordnung (14), wobei ein erster und ein zweiter Schalter ($Q_1$, $Q_2$) den ersten Halbbrückenzweig bilden und ein dritter und ein vierter Schalter ($Q_3$, $Q_4$) den zweiten Halbbrückenzweig, mindestens zwei Anschlüssen, um die Hochdruckentladungslampe (16) zwischen den Mittelpunkt des ersten und des zweiten Halbbrückenzweigs zu koppeln, mindestens zwei Anschlüssen zum Versorgen der Schaltungsanordnung (10) mit einem Gleichspannungssignal; und einer Ansteuerschaltung (20) zum Ansteuern der vier Schalter ($Q_1$ bis $Q_4$), wobei die Ansteuerschaltung (20) ausgelegt ist, Ansteuersignale ($z_1(t)$, $z_2(t)$, $\bar{z}_1(t)$, $\bar{z}_2(t)$) für die vier Schalter ($Q_1$ bis $Q_4$) bereitzustellen, deren Takt ($f_t$) zwischen einer ersten und einer zweiten Frequenz gesweept ist und deren Pulsweite und/oder Phase mit einer vorgebbaren dritten Frequenz ($f_a$) moduliert ist.

FIG. 3

## Beschreibung

### Technisches Gebiet

Die vorliegende Erfindung betrifft eine Schaltungsanordnung zum Betreiben mindestens einer Hochdruckentladungslampe mit vier Schaltern in Vollbrückenanordnung, wobei ein erster und ein zweiter Schalter den ersten Halbbrückenzweig bilden und ein dritter und ein vierter Schalter den zweiten Halbbrükkenzweig, mindestens zwei Anschlüssen, um die Hochdruckentladungslampe zwischen den Mittelpunkt des ersten und des zweiten Halbbrückenzweigs zu koppeln, mindestens zwei Anschlüssen zum Versorgen der Schaltungsanordnung mit einem Gleichspannungssignal, und einer Ansteuerschaltung zum Ansteuern der vier Schalter.

### Stand der Technik

Derartige Schaltungsanordnungen sind bekannt aus der WO 02/30162 A2, aus der WO 03/024161 A1 sowie aus der US 2002/0041165 A1. All diese Druckschriften beschäftigen sich mit einer bei Hochdruckentladungslampen auftretenden Problematik, nämlich dem Auftreten unterschiedlicher Farbeigenschaften bei vertikalem und horizontalem Betrieb. Insbesondere im vertikalen Betrieb tritt eine Farbsegregation auf. Die Ursachen hierfür liegen darin, dass eine unvollständige Vermischung der Metalladditive im Entladungsbereich vorliegt. Als Gegenmaßnahme wird vorgeschlagen, die zweite longitudinale akustische Resonanz anzuregen. Eine grundsätzliche Schaltungskonfiguration zu diesem Zweck ist bekannt aus der US-Anmeldung mit der serial number 09/335020 vom 17. Juni 1999. Der darin beschriebene Ansatz scheint jedoch zwar in einer Laborumgebung geeignet, das gewünschte Ansteuersignal zu erzeugen, jedoch für eine Umgebung, in der entsprechende Signalgeneratoren nicht vorliegen, ist diese Schaltungsanordnung ungeeignet. Die Lösung gemäß der WO 02/30162 soll im Nachfolgenden kurz mit Bezug auf die beigefügten Figuren 1 und 2a beschrieben werden:

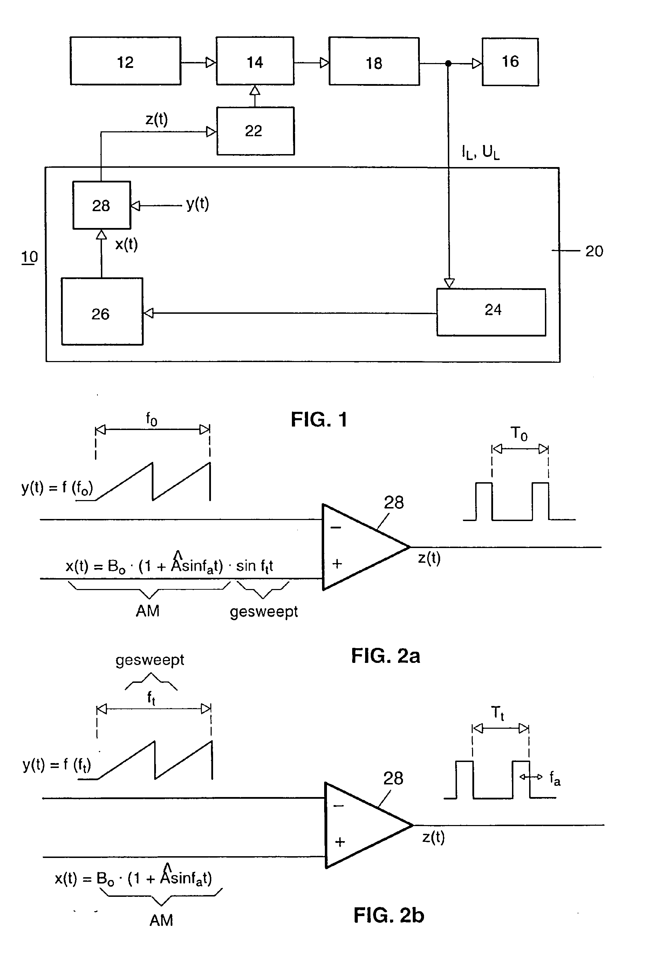

Die in Figur 1 gezeigte Schaltungsanordnung 10 umfasst zunächst einen Vorkonditionierer 12, der insbesondere zur Leistungsfaktorkorrektur dient. Darauf folgt eine Vollbrückenanordnung 14 mit vier Schaltern. Diese dient als Kommutator und ändert die Polarität des Spannungssignals, das der Lampe 16 über die Filterschaltung 18 zugeführt wird. Eine Ansteuerschaltung 20, der als Eingangssignal der Lampenstrom $I_L$ und die Lampenspannung $U_L$ zugeführt werden, stellt als Ausgangssignal Ansteuersignale z(t) bereit, die Treiberschaltungen 22 für die Schalter der Vollbrücke 14 zugeführt werden. Die Ansteuerschaltung (20) umfaßt allgemein ein Leistungsreglerglied, das einen Signalgenerator zur Steuerung eines PWM (Pulsweitenmodulation) -Moduls betreibt. Sie kann sowohl analog als auch digital unter Zuhilfenahme eines Mikroprozessors realisiert werden. Im folgenden wird beispielhaft die letztegenannte Realisierungsvariante beschrieben: Innerhalb der Ansteuerschaltung 20 ist ein Mikroprozessor 24, ein Signalgenerator 26 sowie ein PWM-Modul 28 angeordnet. Mit Bezug auf Figur 2a wird im Stand der Technik dem PWM-Modul 28 einerseits am Modulationseingang ein Signal

$$x(t) = B_0 \cdot (1 + \hat{A} \sin f_a t) \cdot \sin f_t t$$

zugeführt, welches im Signalgenerator 26 auf die vom Mikroprozessor 24 bereitgestellten Parameter hin erzeugt wird. Hierbei liegt die Frequenz $f_a$ der Amplitudenmodulation in einem Bereich zwischen 20 und 30 kHz, während die Trägerfrequenz $f_t$ typischerweise zwischen 45 und 55 kHz gesweept wird. Damit muss dem PWM-Modul 28 über das Signal x(t) ein sehr komplexes Signal zugeführt werden, insbesondere die komplette Signatur des gewünschten Signals. Das über den Systemeingang des PWM-Moduls 28 zugeführte Signal y (t) ist eine Funktion einer konstanten Systemfrequenz $f_0$. (entsprechend einer Periodendauer $T_0$) die gemäß dem Stand der Technik bei 500 kHz liegt, siehe hierzu beispielsweise Figur 5 der WO 02/30162. Daraus ergeben sich folgende, für den praktischen Betrieb bedeutsame Nachteile:

Die gesamte Vollbrücken- und Ansteuerschaltung 14, 20 muss für hohe Schaltfrequenzen ausgelegt sein. Dies resultiert einerseits in hohen Kosten für die benötigten Bauelemente, zum anderen in hohen Schaltverlusten. Andererseits werden hohe Ansprüche an den Signalgenerator 26 gestellt, der die komplette Signalsignatur für das PWM-Modul 28 bereitstellen muss (vergleichbar dem klassischen Class-D-Prinzip).

Wie der WO 02/30162, Seite 7, Zeilen 31 bis 32, entnommen werden kann, handelt es sich bei dem an das PWM-Modul 28 bereitgestellten Spannungssignal x(t) um eine Niederspannungsversion der Wellenform, die zum Ansteuern der Lampe 16 gewünscht wird. In anderen Worten steckt die gesamte Information in dem Signal x(t).

In der Summe hat dies zur Konsequenz, dass zwar gegenüber dem ursprünglichen, oben erwähnten Ansatz gemäß der US serial number 09/335020 gewisse Fortschritte gemacht wurden, jedoch sind diese nicht ausreichend, um einen Einsatz als Massenprodukt zu einem akzeptablen Preis zu ermöglichen.

### Darstellung der Erfindung

Der vorliegenden Erfindung liegt deshalb die Aufgabe zugrunde, die eingangs genannte Schaltungsanordnung derart weiterzubilden, dass das gewünschte Ergebnis, d. h. eine möglichst weitreichende Vermischung der Metalladditive in der Entladungslampe, kostengünstiger realisiert werden kann.

Diese Aufgabe wird gelöst durch eine Schaltungsanordnung mit den Merkmalen von Patentanspruch 1.

Die vorliegende Erfindung beruht auf der Erkenntnis, dass sich eine besonders günstige Realisierung erzielen lässt, wenn einem Komparator, beispielsweise in Form eines PWM-Moduls, einerseits als Signal x(t), d.h. am Modulationseingang, lediglich ein Amplitudenmodulationssignal zur Verfügung gestellt wird, während am Systemeingang als Signal y(t) das gesweepte Trägerfrequenzsignal zugeführt wird. In entsprechender Weise kann die Aufgabe gelöst werden, wenn anstelle der Pulsweite die Phase in geeigneter Weise moduliert wird. Überdies lässt sich über die Tiefe der Pulsweitenmodulation bzw. die Tiefe der Phasenverschiebung die Modulationstiefe am Wechselspannungsausgang zur Lampe hin einstellen. Damit liegen die Abtastschaltvorgänge bei bevorzugten Ausführungsformen in einer Größenordnung von ca. 50 kHz, so dass sich stromsparende und kostengünstige Realisierungen eröffnen.

In einer besonders bevorzugten Ausführungsform wird das analoge Amplitudenmodulationssignal x(t) aus einem digitalen Rechtecksignal per Filterung an einem LC-Glied erzeugt. Die Frequenz dieses Signals liegt bevorzugt unter 50 kHz, vorzugsweise zwischen 20 und 35 kHz.

Die Taktfrequenz des Signals y(t) liegt bevorzugt unter 150 kHz, vorzugsweise zwischen 40 und 60 kHz oder zwischen 80 und 120 kHz, je nach Auslegung der damit zu betreibenden Lampe, insbesondere hinsichtlich ihres Sweepfrequenzbereichs. Die Sweepfrequenz liegt bevorzugt zwischen 50 Hz und 500 Hz, vorzugsweise zwischen 80 Hz und 200 Hz.

Bevorzugt ist im Fall der Pulsweitenmodulation die Ansteuerschaltung so ausgelegt, dass jeweils die Schalter in den Diagonalzweigen der Vollbrückenanordnung mit demselben Signal angesteuert werden. Im Falle der Phasenmodulation umfaßt die Ansteuerschaltung ein Phase-Shift-Modul, dessen Takteingang an eine Quelle für den zwischen der ersten und der zweiten Frequenz gesweepten Takt und dessen Modulationseingang an eine Quelle für das Signal bei der dritten Frequenz ($f_a$) gekoppelt ist.

Die Pulsweite kann unsymmetrisch oder symmetrisch moduliert sein. Bevorzugt umfasst die Ansteuerschaltung ein PWM-Modul, dessen Takteingang an eine Quelle für das zwischen der ersten und der zweiten Frequenz gesweepte Signal und dessen Modulationseingang an eine Quelle für das Signal bei der dritten Frequenz gekoppelt ist.

Bevorzugt ist der Modulationseingang des PWM-Moduls weiterhin an eine Quelle für ein Offsetsignal gekoppelt, wodurch die Grundleistung am Vollbrückenausgang gesteuert werden kann. Damit ist gleichzeitig eine Eingriffsmöglichkeit zur Regulierung der Lampenleistung gegeben.

Weitere vorteilhafte Ausführungsformen können den Unteransprüchen entnommen werden.

## Kurze Beschreibung der Zeichnungen

Im Nachfolgenden werden nunmehr Ausführungsformen der Erfindung unter Bezugnahme auf die beigefügten Zeichnungen näher beschrieben. Es stellen dar:

Figur 1     eine Blockschaltbilddarstellung einer Ausführungsform einer erfindungsgemäßen Schaltungsanordnung;

Figur 2a     eine aus dem Stand der Technik bekannte Ansteuerung des PWM-Moduls gemäß Figur 1;

Figur 2b     eine erfindungsgemäße Ansteuerung des PWM-Moduls gemäß Figur 1;

Figur 3     in Blockschaltbildform eine weitere Ausführungsform einer erfindungsgemäßen Schaltungsanordnung;

Figur 4     in schematischer Darstellung die Erzeugung eines symmetrischen Ausgangssignals des PWM-Moduls;

Figur 5     in schematischer Darstellung die Erzeugung eines asymmetrischen Ausgangssignals des PWM-Moduls;

Figur 6     in schematischer Darstellung die Erzeugung eines dualalternierenden Ausgangssignals des PWM-Moduls bei symmetrischer Implementierung;

Figur 7     in schematischer Darstellung die Erzeugung eines dualalternierenden Ausgangssignals des PWM-Moduls bei asymmetrischer Implementierung;

Figur 8     in schematischer Darstellung die Erzeugung einer Phasenverschiebung im Ausgangssignal des PWM-Moduls;

Figur 9     in schematischer Darstellung einen Vergleich dualalternierender komplementärer Signale bei Pulsweitenmodulation; und

Figur 10     in schematischer Darstellung einen Vergleich dualalternierender komplementärer Signale bei Phasenmodulation.

## Bevorzugte Ausführung der Erfindung

Figur 2b zeigt die erfindungsgemäße Ansteuerung des PWM-Moduls 28 von Figur 1. Es sei nochmals darauf hingewiesen, dass anstelle eines PWM-Moduls, das an seinem Takteingang mit einem Rechtecksignal angesteuert wird, aus dem es ein Sägezahnsignal erzeugt, dieselbe Funktion, wie in den Figuren 2a und 2b angedeutet, auch von einer Schaltung mit einem Komparator realisiert werden kann. In vereinfachter Darstellung kann nämlich ein PWM-Modul als Komparator aufgefasst werden, der an einem Takteingang ein Sägezahnsignal erhält und an seinem Modulationseingang das Modulationssignal, das in ein Pulsweitensignal umgesetzt wird. Im nachfolgenden wird daher das am Takteingang anliegende Signal, d.h. ein Rechtecksignal am Takteingang eines PWM-Moduls oder ein Sägezahnsignal am Takteingang eines Komparators, allgemein mit $y(t)$ bezeichnet. Vorliegend wird nun an den Takteingang ein Sägezahnsignal angelegt, dessen Frequenz gleich der geweepten Taktfrequenz $f_t$ ist. Am Modulationseingang des PWM-Moduls 28 liegt als Signal $x(t)$ ein Signal an, das die Amplitudenmodulationsinformation enthält, nämlich das Signal

$$x(t) = B_0 \cdot (1 + \hat{A}\sin f_a t).$$

Am Ausgang wird das Signal $z(t)$ bereitgestellt, welches eine Periodendauer von $T_t$ aufweist und dessen hintere Flanke sich mit der Frequenz $f_a$ verschiebt. Die Modulationstiefe kann mit dem Parameter $\hat{A}$ eingestellt werden.

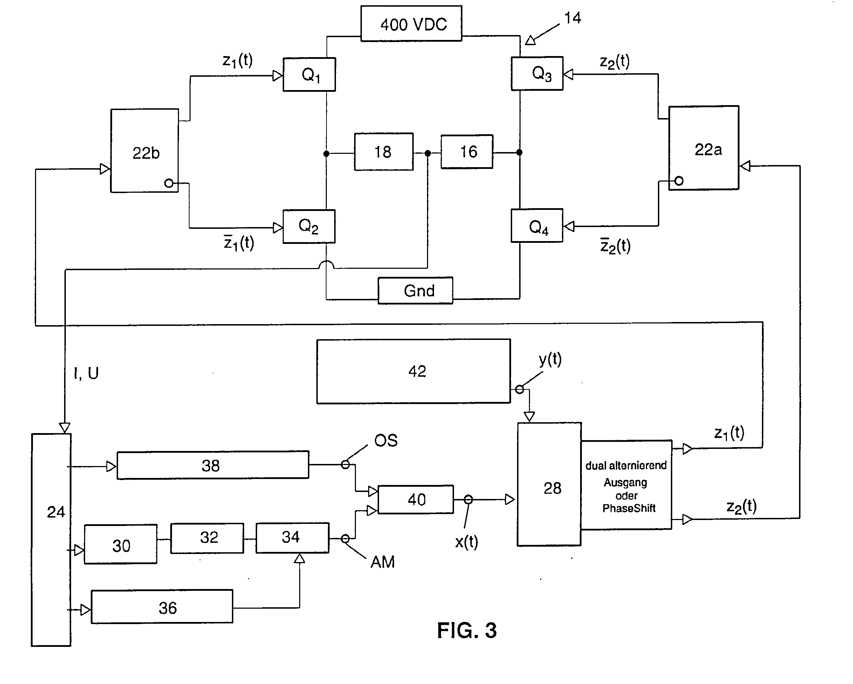

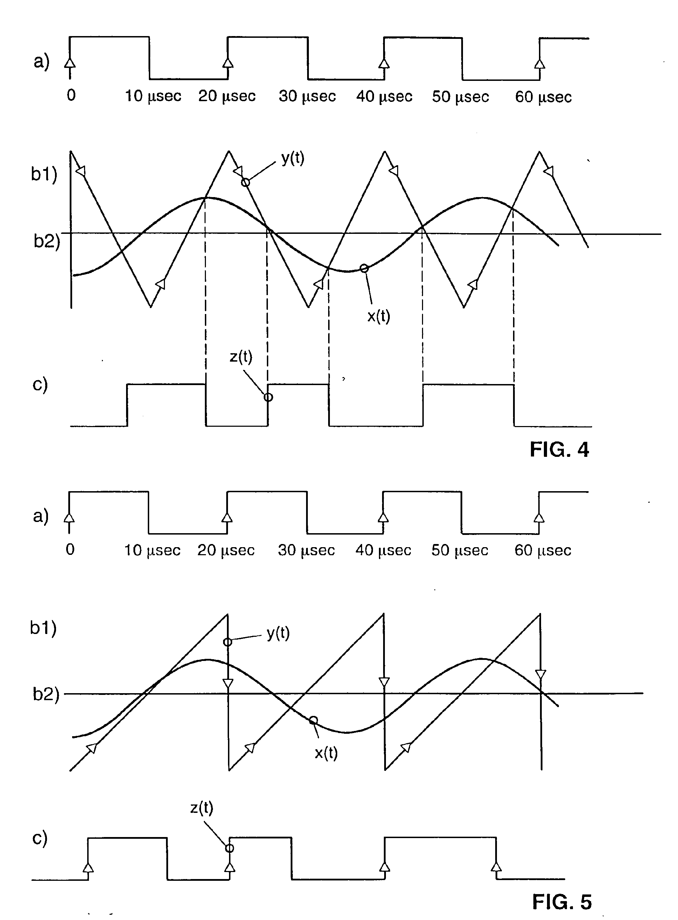

Figur 3 zeigt ein weiteres Ausführungsbeispiel einer erfindungsgemäßen Schaltungsanordnung, wobei Bauelemente und Baugruppen, die denen in Figur 1 vergleichbar sind, mit identischen Bezugszeichen bezeichnet sind und nicht nochmals erklärt werden. Im Mikroprozessor 24 wird die Erzeugung eines Rechtecksignals mit der Frequenz initiiert, mit der die Amplitudenmodulation oder die Phasenverschiebung vorgenommen werden soll. Dazu wird in einem Rechteckgenerator 30 ein Rechtecksignal erzeugt, das, um daraus ein Sinussignal zu machen, über ein LC-Filter 32 geleitet wird. In einem Dämpfungsglied 34 wird dieses Sinussignal gemäß einem in der Einrichtung 36 vorgegebenen Modulationsindex modifiziert. Ein Offsetsignal OS kann über eine Einheit 38 definiert werden und dient der Einstellung der Lampenleistung. Das Offsetsignal OS und das Amplitudenmodulationssiänal AM werden einem Addierer 40 zugeführt, der daraus das Signal $x(t)$ erzeugt, welches an den Modulationseingang des PWM-Moduls 28 gekoppelt wird. Ein gesweeptes Taktsignal $y(t)$ wird im Block 42 erzeugt und an den Takteingang des PWM-Moduls 28 gekoppelt. Das PWM-Modul 28 erzeugt je nach Ausführungsform an seinem Ausgang ein Signal $z(t)$ oder ein Paar dualalternierender Signale $z_1(t)$ und $z_2(t)$. Wird das PWM-Modul durch ein Phase-Shift-Modul ersetzt, erzeugt es ein hinsichtlich seiner Phasenlage moduliertes Signalpaar. Auf diese Aspekte wird mit Bezug auf die Figuren 4 bis 10 noch näher eingegangen werden. Die Signale $z_1(t)$ und $z_2(t)$ stellen dualalternierende PWM-Signale dar. Sie unterscheiden sich durch ihre um 180° Grad verschobene Phase und dienen der Ansteuerung der Treiberschaltungen 22a für die Schalter $Q_3$ und $Q_4$ und der Treiberschaltung 22b für die Schalter $Q_1$ und $Q_2$ der Vollbrücke 14, die zwischen einer Gleichspannungsversorgung (400VDC) und Masse (Gnd) angeschlossen ist. Die Treiberschaltungen 22a, 22b stellen neben den Signalen $z_1(t)$ und $z_2(t)$ Signale $\bar{z}_1(t)$ und $\bar{z}_2(t)$ bereit, wobei $\bar{z}_1(t)$ komplementär zu $z_1(t)$ ist und $\bar{z}_2(t)$ komplementär zu $z_2(t)$.

Die Figuren 4 und 5 zeigen in prinzipieller Darstellung die Erzeugung eines symmetrischen (Figur 4) und eines asymmetrischen (Figur 5) PWM-Modul-Ausgangssignals. Der jeweilige Kurvenzug a) kennzeichnet das Basisoszillatorsignal, vorliegend ein Rechtecksignal bei der Frequenz $f_t$, die beispielsweise mit einer Sweepfrequenz $f_s$ von 100 Hz zwischen 45 und 55 kHz gesweept wird. Der jeweilige Kurvenzug $x(t)$ kennzeichnet das amplitudenmodulierte Ausgangssignal des Generators 26. $x(t)$ ist beispielsweise ein Sinussignal mit der Amplitude $\hat{A}$ und einer Frequenz von 24,5 kHz.

In Figur 4 wird als Signal $y(t)$ ein aus dem Basisoszillatorsignal, siehe Kurvenzug a), abgeleitetes symmetrisches Komparator-Rampen-Signal erzeugt. In Figur 5 wird aus dem Basisoszillatorsignal ein asymmetrisches Komparator-Rampen-Signal erzeugt.

Durch Anlegen der Signal $y(t)$ und $x(t)$ an einen Komparator 28 (siehe Figur 2b), beispielsweise in einem PWM-Modul, entsteht das jeweilige Signal $z(t)$, das über die Treiberschaltungen 22 an die Schalter der Vollbrücke 14 angelegt wird. Wie deutlich zu erkennen, lässt sich durch den Verstärkungsfaktor des Signals $x(t)$, also $\hat{A}$ gemäß Figur 2b, die Tiefe der Pulsweitenmodulation einstellen, während durch die Frequenz $f_a$ (siehe Figur 2b) die Häufigkeit der Pulsweitenvariationen definiert ist.

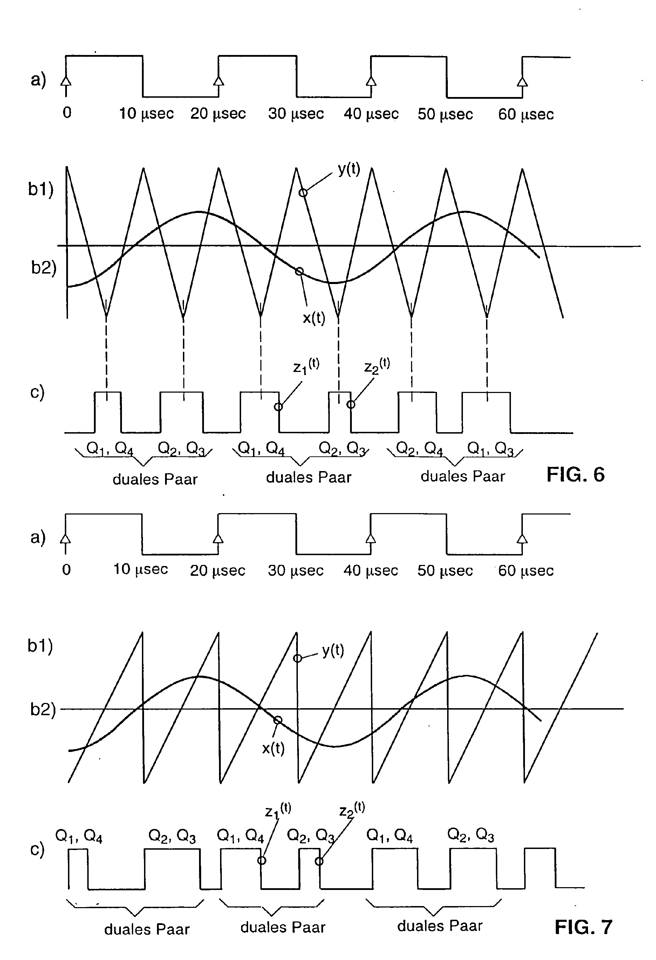

Die Figuren 6 und 7 zeigen die Erzeugung dualer Paare von Ansteuersignalen $z_1(t)$ und $z_2(t)$, wiederum einmal mit symmetrischem PWM-Modul-Ausgangssignal (Figur 6) und mit asymmetrischem PWM-Modul-Ausgangssignal (Figur 7). Hierbei wird aus demselben Basisoszillatorsignal, das in den Figuren 4 und 5 verwendet wurde, mit dem Fachmann geläufigen Mitteln ein Komparator-Rampen-Signal $y(t)$ von der doppelten Basisoszillatorfrequenz abgeleitet. Das jeweilige, am Modulationseingang anliegende Amplitudenmodulationssignal $x(t)$ ist dasselbe wie in den Figuren 4 und 5. Als Konsequenz entstehen duale Paare $z_1(t)$ und $z_2(t)$ von Ausgangssignalen des PWM-Moduls 28 (in Figur 1 nicht dargestellt) zur Ansteuerung der Schalter $Q_1$ bis $Q_4$ der Vollbrücke. Wie für den Fachmann offensichtlich, sind die jeweils diagonal zueinander liegenden Schalter, d. h. $Q_1$ und $Q_4$ bzw. $Q_2$ und $Q_3$, für die Zeit $\tau$ gleichzeitig leitend.

In allen vier Ausführungsformen gemäß den Figuren 4 bis 7 treten an den Ausgängen des PWM-Moduls 28 keine Rechtecksignale mit Frequenzen höher als ft., vorliegend also nicht höher als 55 kHz.

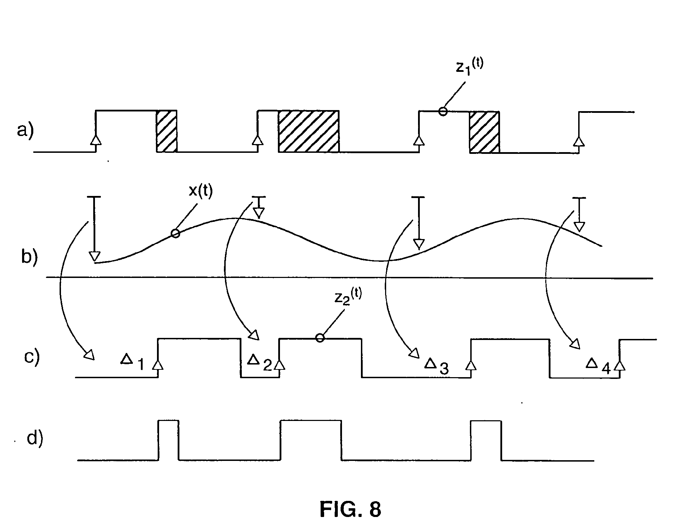

Figur 8 zeigt prinzipiell die Erzeugung eines PWM-Modul-Ausgangssignals mit Phasenverschiebung unter Verwendung eines Phase-Shift-Moduls (nicht dargestellt) anstelle eines PWM-Moduls. Hierbei bildet das als Kurvenzug a) dargestellte Basisoszillatorsignal das Signal $z_1(t)$ und das als Kurvenzug c) dargestellte verzögerte Signal, dessen Verzögerungswert $\Delta_i$ umgekehrt proportional dem PWM-Modulationssignal $x(t)$ ist. Ein PWM-Modulationssignal mit großer Amplitude führt daher zu einer kleinen Verzögerung, ein PWM-Modulationssignal $x(t)$ mit kleiner Amplitude zu einer großen Verzögerung. Die in der Figur 8 beim Kurvenzug b) dargestellten senkrechten Pfeile entsprechen den in Figur 8c dargestellten Verzögerungen $\Delta_1$, $\Delta_2$ usw. zwischen $z_1(t)$ und $z_2(t)$.

In Figur 8d ist das aktive PWM-Fenster als Ergebnis der Ansteuerung der einzelnen Schalter dargestellt, das die gesamte Information über die gesweepte Taktfrequenz und das Amplitudenmodulationssignal enthält. Mit Bezug auf Fig. 8 werden die Schalter der Vollbrücke wie folgt angesteuert: $Q_1$ mit $z_1(t)$, $Q_2$ mit $\bar{z}_1(t)$, $Q_3$ mit $z_2(t)$ und $Q_4$ mit $\bar{z}_2(t)$.

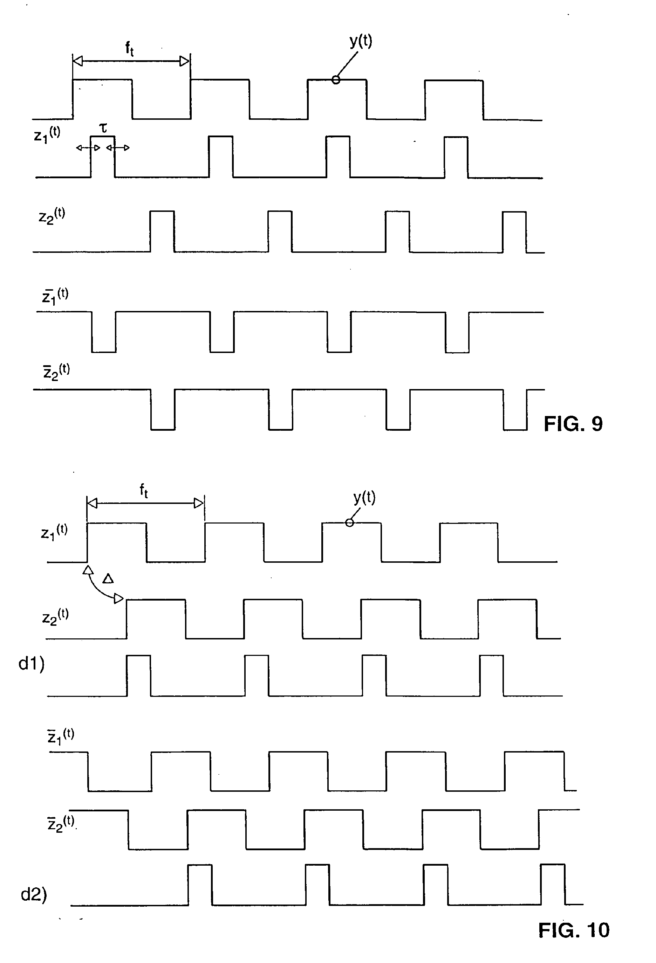

Figur 9 zeigt zur Verdeutlichung für den Fall der Pulsweitenmodulation nochmals den zeitlichen Verlauf des Taktsignals $y(t)$ bei der Frequenz $f_t$, sowie der Signale $z_1(t)$, $\bar{z}_1(t)$, $z_2(t)$ und $\bar{z}_2(t)$. Variiert mit der Frequenz fa ist die Zeit $\tau$, in der die jeweiligen Schalter eingeschaltet sind.

Figur 10 zeigt zur Verdeutlicheung für den Fall der Phasenmodulation nochmals den zeitlichen Verlauf des Taktsignals $y(t)$ bei der Frequenz $f_t$, sowie der Signale $z_1(t)$, $\bar{z}_1(t)$, $z_2(t)$ und $\bar{z}_2(t)$. Die Signalverläufe d1) und d2) zeigen die effektive Überlagerung der Signale an den Schaltern $Q_1$ $Q_4$ bzw. $Q_2$ $Q_3$. Variiert mit der Frequenz fa ist die Verzögerung $\Delta$, mit der z1(t) auf z2(t) folgt.

Generell ist zu sagen, dass die Verfahren zur Erzeugung der Ausgangssignale des PWM-Moduls 28 unter Verwendung eines symmetrischen Signals $y(t)$ bevorzugt sind, da sie am Ausgang der Vollbrücke 14 weniger Oberwellen erzeugen.

**Patentansprüche**

1. Schaltungsanordnung zum Betreiben mindestens einer Hochdruckentladungslampe (16) mit

 - vier Schaltern ($Q_1$ bis $Q_4$) in Vollbrückenanordnung (14), wobei ein erster und ein zweiter Schalter ($Q_1$, $Q_2$) den ersten Halbbrückenzweig bilden und ein dritter und ein vierter Schalter ($Q_3$, $Q_4$) den zweiten Halbbrückenzweig,
 - mindestens zwei Anschlüssen, um die Hochdruckentladungslampe (16) zwischen den Mittelpunkt des ersten und des zweiten Halbbrückenzweigs zu koppeln,
 - mindestens zwei Anschlüssen zum Versorgen der Schaltungsanordnung (10) mit einem Gleichspannungssignal; und
 - einer Ansteuerschaltung (20) zum Ansteuern der vier Schalter ($Q_1$ bis $Q_4$),

**dadurch gekennzeichnet,**
**dass** die Ansteuerschaltung (20) ausgelegt ist, Ansteuersignale ($z_1(t)$, $z_2(t)$, $\bar{z}_1(t)$, $\bar{z}_2(t)$) für die vier Schalter ($Q_1$ bis $Q_4$) bereitzustellen, deren Takt ($f_t$) zwischen einer ersten und einer zweiten Frequenz gesweept ist und deren Pulsweite und/oder Phase mit einer vorgebbaren dritten Frequenz ($f_a$) moduliert ist.

2. Schaltungsanordnung nach Anspruch 1,
**dadurch gekennzeichnet,**
**dass** die Taktfrequenz unter 150 kHz liegt, vorzugsweise zwischen 40 und 60 kHz oder zwischen 80 und 120 kHz.

3. Schaltungsanordnung nach Anspruch 1 oder 2,
**dadurch gekennzeichnet,**
**dass** die dritte Frequenz ($f_a$) unter 50 kHz, vorzugsweise zwischen 20 und 35 kHz.

4. Schaltungsanordnung nach einem der vorhergehenden Ansprüche,
**dadurch gekennzeichnet,**
**dass** die Sweepfrequenz ($f_s$) zwischen 50 Hz und 500 Hz liegt, vorzugsweise zwischen 80 Hz und 200 Hz.

5. Schaltungsanordnung nach einem der vorhergehenden Ansprüche,
**dadurch gekennzeichnet,**
**dass** die Ansteuerschaltung (20) ausgelegt ist, die Schalter ($Q_1$, $Q_3$; $Q_2$, $Q_4$) der Vollbrückenanordnung (14) mit dual-alternierenden komplementären Signalen ($z_1(t)$, $z_2(t)$, $\bar{z}_1(t)$, $\bar{z}_2(t)$) anzusteuern.

6. Schaltungsanordnung nach einem der Ansprüche 1 bis 5,
**dadurch gekennzeichnet,**
**dass** die Pulsweite unsymmetrisch moduliert ist.

7. Schaltungsanordnung nach einem der Ansprüche 1 bis 5,
**dadurch gekennzeichnet,**
**dass** die Pulsweite symmetrisch moduliert ist.

8. Schaltungsanordnung nach einem der vorhergehenden Ansprüche,
**dadurch gekennzeichnet,**
**dass** die Ansteuerschaltung (20) ein PWM-Modul (28) umfasst, dessen Takteingang an eine Quelle für den zwischen der ersten und der zweiten Frequenz gesweepten Takt und dessen Modulationseingang an eine Quelle für das Signal bei der dritten

Frequenz ($f_a$) gekoppelt ist.

9. Schaltungsanordnung nach Anspruch 9,
   **dadurch gekennzeichnet,**
   **dass** der Modulationseingang des PWM-Moduls weiterhin an eine Quelle (38) für ein Offsetsignal (OS) gekoppelt ist.

10. Schaltungsanordnung nach einem der Ansprüche 1 bis 5,
    **dadurch gekennzeichnet,**
    **dass** die Ansteuerschaltung ein Phase-Shift-Modul umfaßt, dessen Takteingang an eine Quelle für den zwischen der ersten und der zweiten Frequenz gesweepten Takt und dessen Modulationseingang an eine Quelle für das Signal bei der dritten Frequenz ($f_a$) gekoppelt ist.

**FIG. 1**

$y(t) = f(f_o)$

$x(t) = B_o \cdot (1 + \hat{A}\sin f_a t) \cdot \sin f_t t$

AM  gesweept

**FIG. 2a**

gesweept

$y(t) = f(f_t)$

$x(t) = B_o \cdot (1 + \hat{A}\sin f_a t)$

AM

**FIG. 2b**

EP 1 501 338 A2

400 VDC

14

$z_1(t)$  $Q_1$  $Q_3$  $z_2(t)$

22b

18  16

22a

$\overline{z}_1(t)$  $Q_2$  $Q_4$  $\overline{z}_2(t)$

Gnd

42  y(t)

I, U

OS

38

24

40  28  dual alternierend Ausgang oder PhaseShift  $z_1(t)$

30  32  34  x(t)

AM

36  $z_2(t)$

FIG. 3

a)

0    10 µsec   20 µsec   30 µsec   40 µsec   50 µsec   60 µsec

b1)

y(t)

b2)

x(t)

c)

z(t)

**FIG. 4**

a)

0    10 µsec   20 µsec   30 µsec   40 µsec   50 µsec   60 µsec

b1)

y(t)

b2)

x(t)

c)

z(t)

**FIG. 5**

**FIG. 6**

**FIG. 7**

FIG. 8

FIG. 9

FIG. 10